# EUROPEAN PATENT APPLICATION

(11) **EP 1 764 680 A2**
(43) Date of publication of application: **21.03.2007**
(21) Application number: 06118064.2
(22) Date of filing: 28.07.2006
(51) Int. Cl.: G06F 3/12

(54) **Print system**

(30) Priority: 02.09.2005 JP 2005255764
(71) Applicant: STAR MICRONICS CO., LTD., Shizuoka-shi, Shizuoka (JP)
(72) Inventor: Owen, Lawrence, c/o Star Micronics Co., Ltd., Shizuoka-shi, Shizuoka (JP)
(74) Representative: Weihs, Bruno Konrad

(57) **Abstract**

A processing-related information storage unit (85) stores processing-related information pertaining to processing of an original image. A processed image generation unit (81) generates a processed image based on print data and processing-relating information, both pertaining to an original image. A processing-related information alteration receipt unit (89) guides a user in altering the processing-related information with a processed image being displayed, and receives alterations to the processing-related information. When alterations to the processing-related information have been received, an update unit (92) updates the processing-related information stored in the processing-related information storage unit (85) based on the alterations, and updates the processed image to be displayed.

## Description

### TECHNICAL FIELD

The present invention relates to a print system.

### BACKGROUND

A known print system causes a printer to produce a printout of image data created by an application program. For example, a known print system causes a printer to produce a printout of the image of a receipt (hereinafter called a "receipt image") created by a POS (Point Of Sales) application program.

In such a print system, when the image data created by the application program are subjected to processing designated by the user during the course of printing-out operation to thus produce a printout, convenience of the print system can be enhanced. For example, in the above-described print system which causes the printer to produce a printout of a receipt image created by the POS application program, in a case where the receipt image includes a keyword (e.g., the name of a specific product, or the like) specified by the user, so long as an image (e.g., an image of a coupon, an image of an advertisement, or the like) specified by the user is added to the receipt image, there can be performed advertisement of the product or a related product thereof or delivery of a coupon, or the like, to a client who has regularly purchased a specific commodity, while labor is reduced. Thus, convenience of such a print system can be enhanced.

In order to realize such a print system, an attempt must be made to enable the user to affect appropriate settings pertaining to processing of the image data created by the application program.

### SUMMARY

A print system causes a printer to produce a printout of a processed image based on print data pertaining to an original image generated by any one of a plurality of print data generation programs. The print system includes: a processing-related information storage unit that stores processing-related information pertaining to processing of the original image; a processed image generation unit that generates the processed image based on the print data pertaining to the original image and the processing-related information stored in the processing-related information storage unit; a display unit that displays the processed image generated by the processed image generation unit; a processing-related information alteration receipt unit that guides a user to alter the processing-related information stored in the processing-related information storage unit with the processed image being displayed, and receives alterations to the processing-related information; and an update unit that updates the processing-related information stored in the processing-related information storage unit in accordance with the alterations received by the processing-related information alteration receipt unit, and updates the processed image to be displayed by the display unit.

### BRIEF DESCRIPTION OF THE DRAWINGS

In the accompanying drawings:
Fig. 1 is a view showing the entire configuration of a print system according to an embodiment of the present invention;
Fig. 2 is a view for describing operation of a host computer;
Fig. 3 is a view showing an example original receipt image;
Fig. 4 is a view showing an example processed receipt image;
Fig. 5 is a view showing an example processed receipt image;
Fig. 6 is a view showing an example processed receipt image;
Fig. 7 is a view showing an example processed receipt image;
Fig. 8 is a view showing an example processed receipt image;
Fig. 9 is a view showing an example processed receipt image;
Fig. 10 is a view showing an example preview screen;
Fig. 11 is a functional block diagram of the print system according to an embodiment of the present invention;
Fig. 12 is a view showing an example processing-related information table; and
Fig. 13 is a flowchart showing processing to be performed by first and second processed image data generation units.

### DETAILED DESCRIPTION

Embodiments of the present invention will be described in detail below with reference to the accompanying drawings.

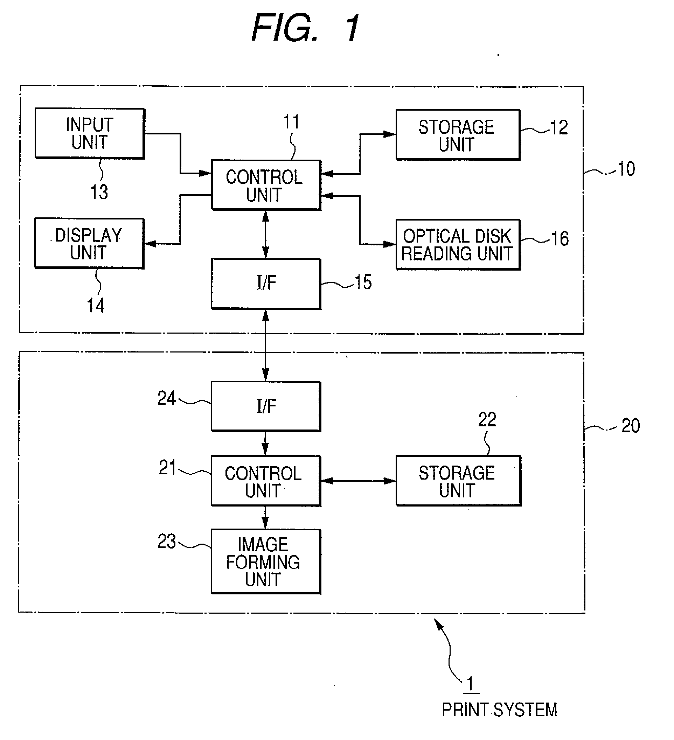

Fig. 1 is a view showing a configuration of a print system according to an embodiment. As illustrated, the print system 1 of one or more embodiments includes a host computer 10 (a print request device), and a printer 20.

As shown in Fig. 1, the host computer 10 is a computer which includes a control unit 11; a storage unit 12; an input unit 13; a display unit 14; an interface (I/F) 15; and an optical disk reading unit 16.

The control unit 11 operates in accordance with an operating system and other programs, which are stored in the storage unit 12, to thus execute various information processing operations. The storage unit 12 is configured by a computer-readable information storage medium. For example, the storage unit 12 is constituted by including ROM (Read Only Memory), RAM (Random Access Memory), and a hard disk drive. The storage unit 12 stores a program to be executed by the control unit 11. The storage unit 12 also operates as work memory which stores various types of data required during the course of processing performed by the control unit 11.

The input unit 13 is, e.g., a keyboard, a mouse, or the like, and inputs to the control unit 11 the data conforming to an input performed by the user. The display unit 14 is, e.g., a display or the like, and displays information in accordance with an instruction input from the control unit 11. In accordance with the instruction input from the control unit 11, the optical disk reading unit 16 reads a program or data stored in an optical disk (an information storage medium); e.g., a DVD-ROM or the like.

The interface 15 is for connecting various peripheral devices or information storage mediums (memory cards or the like) to the host computer 10. The interface 15 outputs the data input from a peripheral device, or the like, to the control unit 11. In accordance with the instruction input from the control unit 11, the interface 15 outputs various data to the peripheral device, or the like. The host computer 10 is provided with one or a plurality of connection ports (hereinafter called "USB ports") complying with, e.g., USB (Universal Serial Bus) interface specifications.

In one or more embodiments, Windows OS (Registered Trademark) manufactured by Microsoft Corporation is assumed to be installed in the host computer 10 as an operating system. Further, a POS application program having a receipt creation function (hereinafter described as a "POS application") is also assumed to be installed in the host computer 10.

The host computer 10 is connected to the printer 20 by way of the interface 15 so that data can be exchanged between the computer and the printer. As shown in Fig. 1, the printer 20 includes a control unit 21, a storage unit 22, an image-forming unit 23, and an interface (I/F) 24.

The control unit 21 controls the entirety of the printer 20. The storage unit 22 includes ROM or RAM, and stores various programs and data, which are required for performing printing. The interface 24 receives the data transmitted from the host computer 10, and outputs the thus-received data to the control unit 21. The printer 20 is provided with, e.g., a USB port, as the interface 24. The image-forming unit 23 forms an image, which is based on the data input by the control unit 21, on an image recording medium, such as a print sheet or the like.

The printer 20 herein receives from the host computer 10 raster image data of a predetermined data format (more accurately, command data representing coloring information about respective pixels constituting an image), and forms the raster image data on an image recording medium. The printer 20 has an automatic cutting mechanism; receives from the host computer 10 command data which instruct cutting of the image recording medium, in conjunction with the command data used for forming an image on the image recording medium; and cuts the image recording medium at a given position in a given mode.

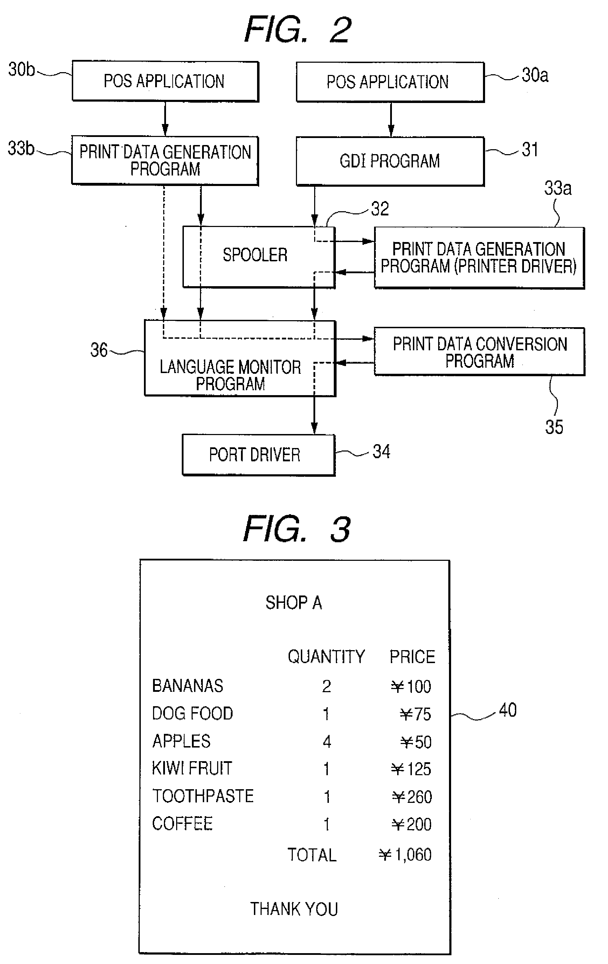

Operation of the host computer 10 performed upon issuance of an instruction for printing the receipt image created by the POS application will now be described. Fig. 2 is a view for describing the operation of the host computer 10. Although a POS application program 30a and a POS application program 30b are provided in the drawing, at least one of the application programs is installed in the host computer 10. Fig. 3 shows an example of receipt images created by the POS application 30a and the POS application 30b. The receipt image created by the POS application 30a and that created by the POS application 30b are called "original receipt images." The following descriptions are provided on the assumption that an instruction for printing an original receipt image 40 shown in Fig. 3 has been issued.

When the POS application 30a has issued a command to print the original receipt image 40, a GDI (Graphic Device Interface) program 31 generates meta data representing the command to render the original receipt image 40. This GDI program 31 is a program provided as a part of the operating system, and the meta data do not depend on a device.

The meta data generated by the GDI program 31 are supplied to a print data generation program (a printer driver) 33a by way of a spooler 32. The print data generation program 33a generates print data of a predetermined data format on the basis of meta data, and supplies the meta data to the spooler 32. The print data to be generated may be interpretable or uninterpretable for the printer 20. For example, the print data may be interpretable for a printer which differs from the printer 20 in terms of specifications.

For example, as appropriate, the print data generation program 33a generates, as print data, command data representing top, bottom, right, and left margins of an image recording medium, command data representing the type font, command data showing print details of each line (a string of print characters for each line), command data used for controlling the mechanism of the printer (e.g., command data for instructing a position at which the image recording medium is to be cut and a mode of cutting the same), or the like; and supplies the print data to the spooler 32. Finally, the print data generation program 33a generates command data representing the end of a page, and supplies the command data to the spooler 32. The command data representing print details of each line are, for example, "d," "o," "g," "_," "f," "o," "o," "d," "_," "_," "_," "_," "_," "_," "_," "1," "_," "_," "_," "_," "_," "_," "_," "¥," "7," "5," "5," LF or "_," "_," "_," "_," "T," "h," "a," "n," "k," "_," "y," "o," "u," "_," "_," "_," "_," LF. The character "_" denotes a half-size blank character. Further, "LF" denotes command data representing a line feed.

When the POS application 30b has issued an instruction for printing the original receipt image 40, the print data generation program 33b generates print data. The print data generation program 33b is a program called by a designation other than a "printer driver," and is, e.g., a program which is supplied as a part of the POS application 30b. The print data generation program 33b generates print data similar to that generated by the print data generation program 33a. The print data generated by the print data generation program 33a and the print data generated by the print data generation program 33b are hereinafter called "original print data."

The original print data generated by the print data generation program 33a or 33b are temporarily retained in the storage unit 12 by means of the spooler 32. The spooler 32 sequentially supplies the original print data to a port driver 34 while monitoring the status of the printer 20 in order to output the original print data from the port connected to the printer 20.

A language monitor program 36 monitors supply of the original print data from the spooler 32 to the port driver 34. The language monitor program 36 is used for receiving status information from the printer 20 by way of the port driver 34 and supplying the information to a predetermined program (e.g., a status reference program or the like) . When having detected the original print data supplied from the spooler 32, the language monitor program 36 restricts (hinders) supply of the original print data to the port driver 34, and supplies the original print data to a print data conversion program 35.

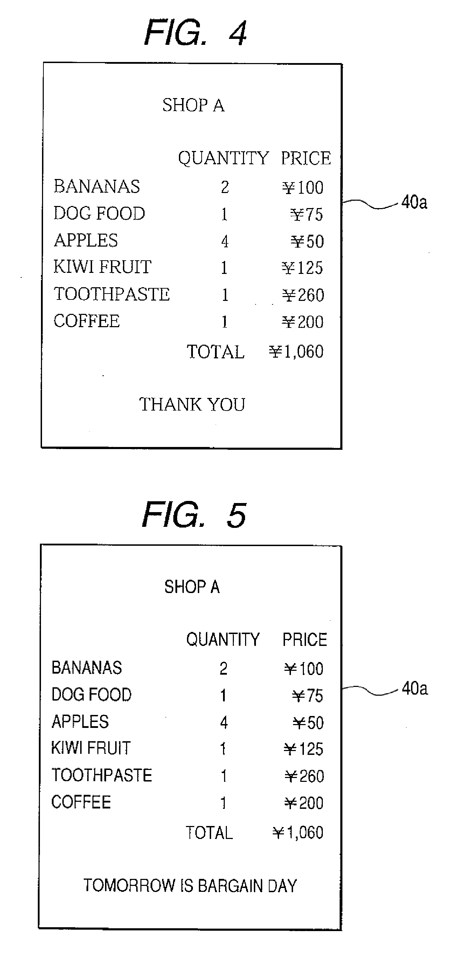

Based on the original print data sequentially supplied from the language monitor program 36, the print data conversion program 35 generates raster image data pertaining to a receipt image that is formed as a result of the original receipt image 40 having undergone processing specified by the user (hereinafter called a "processed receipt image"). Figs. 4 to 9 shows example processed receipt images.

As shown in, e.g., Fig. 4, the print data conversion program 35 generates a processed receipt image 40a into which the font type and style (a standard typeface, a bold typeface, or an italic typeface) of the original receipt image 40 have been converted into another font type and style. In the illustrated embodiment, the font type of the original receipt image 40 has been converted into another font type. This function will be hereinafter called a "font conversion function."

As shown in, e.g., Fig. 5, the print data conversion program 35 generates the processed receipt image 40a into which a given character string included in the original receipt image 40 has been replaced with another character string. In the illustrated embodiment, the character string "Thank you" included in the original receipt image 40 is replaced with a character string of "Tomorrow is Bargain Day." This function is hereinafter called a "text replacement function." Moreover, the character string to be replaced with another character string is called a "replaced character string," and the other character string is called a "replacement character string."

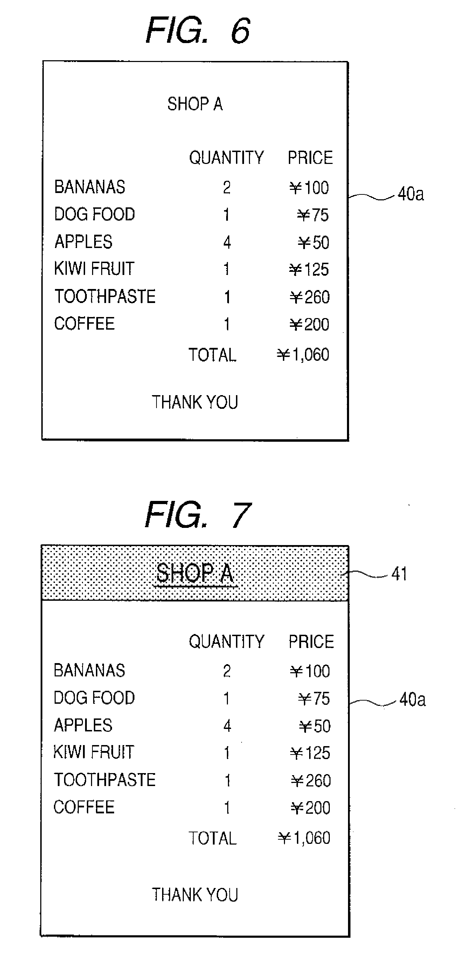

As shown in, e.g., Fig. 6, the print data conversion program 35 generates the processed receipt image 40a in which the upper end portion and/or the lower end portion of the original receipt image 40 are cropped. In the illustrated embodiment, the upper end portion of the original receipt image 40 is cropped. This function is hereinbelow called a "crop function."

As shown in, e.g., Fig. 7, the print data conversion program 35 generates the processed receipt image 40a in which a logo image 41 is added to the upper side and/or the lower side of the original receipt image 40. In the illustrated embodiment, after the upper end portion of the original receipt image 40 has been temporarily cropped, the logo image 41 is added to the upper side of the original receipt image 40. This function is hereinafter called a "logo addition function."

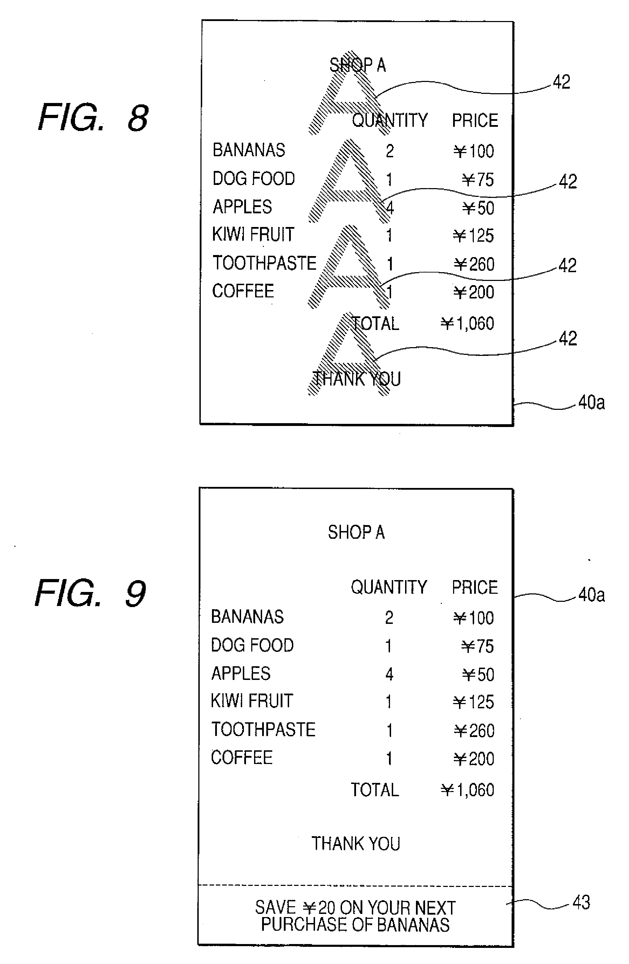

As shown in, e.g., Fig. 8, the print data conversion program 35 generates the processed receipt image 40a in which a background image 42 is added to the background of the original receipt image 40. This function is hereinbelow called a "merge function."

As shown in, e.g., Fig. 9, the print data conversion program 35 generates the processed receipt image 40a in which a coupon image 43 is added to the original receipt image 40. Specifically, the print data conversion program 35 determines whether or not the original receipt image 40 includes a predetermined keyword. According to the result of determination, an image corresponding to the keyword is added. For example, a determination is made as to whether or not the original receipt image 40 includes the name of a specific commodity. In accordance with a result of determination, a coupon image or an advertisement image pertaining to the commodity or another commodity related thereto is added. In the illustrated embodiment, since the original receipt image 40 includes a character string "banana," a coupon image 43 for a banana is added. This function is hereinbelow called a "coupon imparting function."

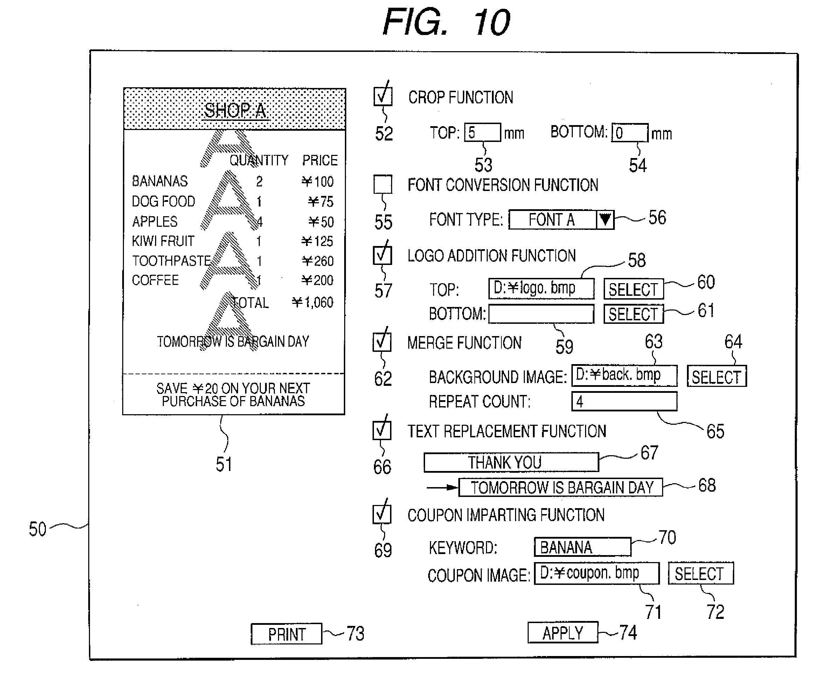

After having generated the processed receipt image 40a, the print data conversion program 35 causes the display unit 14 to display a preview image. Fig. 10 shows an example preview image. As illustrated, a preview screen 50 includes a preview area 51, and the processed receipt image 40a is displayed.

This preview screen 50 enables the user to alter settings pertaining to processing of the original receipt image 40. As shown in Fig. 10, the preview screen 50 shows specifics of current settings of various setting items pertaining to processing of the original receipt image 40, and includes check boxes, combo boxes, and input forms, which are used for designating alterations.

For example, in relation to the crop function, the preview screen 50 includes a check box 52 used for specifying whether or not the crop function is used; an input form 53 used for specifying a width, which is to be cropped, from the upper end of the original receipt image 40; and an input form 54 used for specifying a width, which is to be cropped, from the lower end of the original receipt image 40. For example, in relation to the font conversion function, the preview screen 50 includes a check box 55 used for specifying whether or not the font conversion function is used; and a combo box 56 used for selecting a font type to be employed for conversion.

For example, in relation to the logo addition function, the preview screen 50 includes a check box 57 used for specifying whether or not the logo addition function is used; an input form 58 used for specifying logo image data to be added to the upper side of the receipt image; and an input form 59 used for specifying logo image data added to the lower side of the receipt image. The preview screen 50 also includes a selection button 60 assigned to the input form 58, and a selection button 61 assigned to the input form 59. When the user points the selection buttons 60, 61 by means of a mouse or the like, a window (not shown) for guiding selection of logo image data appears. When the logo image data are selected, a path for the logo image data is input to the input forms 58, 59.

For example, in relation to the merge function, the preview screen 50 includes a check box 62 used for specifying whether or not the merge function is used; an input form 63 used for specifying background image data pertaining to the receipt image; a selection button 64 assigned to the input form 63; and an input form 65 used for specifying the maximum number of times the background image data are to be repeatedly output. When the user points the selection button 64 through use of the mouse or the like, a window (not shown) for guiding selection of background image data appears. When the background image data are selected, a path for the background image data is input to the input form 63.

For example, in relation to the text replacement function, the preview screen 50 also includes a check box 66 used for specifying whether or not the text replacement function is to be used; an input form 67 used for specifying a replaced character string; and an input form 68 used for specifying a replacement character string. The combination of the replaced character string with the replacement character string may be set in numbers. In that case, the preview screen 50 includes a plurality of combinations of input forms 67 and 68.

For example, in relation to the coupon imparting function, displayed on the preview screen 50 are a check box 69 used for specifying whether or not the coupon imparting function is to be used; an input form 70 used for specifying a keyword; an input form 71 used for specifying coupon image data; and a selection button 72 assigned to the input form 71. When the user points the selection button 72 by use of a mouse or the like, there appears a window (not shown) for guiding the user in selecting the coupon image data. When the coupon image data are selected, a path for the coupon image data is input to the input form 71. More than one combination of a keyword and coupon image data may be set. In such a case, the preview screen 50 includes a plurality of combinations of the input forms 70 and 71.

The preview screen 50 includes an application button 74. When the user has performed operation for selecting the application button 74 by use of a mouse or the like, settings pertaining to the processing of the original receipt image 40 are changed based on specifics of the respective check boxes, the respective combo boxes, and the respective input forms, all of which are included on the preview screen 50. Further, the processed receipt image 40a, on which the alterations are reflected, appears in a preview area 51.

The preview screen 50 includes a print button 73. When the user performs operation for pointing the print button 73 by use of a mouse or the like, printing-out of the processed receipt image 40a is commenced. Specifically, the print data conversion program 35 generates print data to be used for causing the printer 20 to form the processed receipt image 40a on an image recording medium. The print data generated by the print data conversion program 35 are output from the port connected to the printer 20 by way of the language monitor program 36 and the port driver 34, and the thus-output print data are supplied to the printer 20.

The print data conversion program 35 and the language monitor program 36 are installed in the host computer 10 by way of an information storage medium; e.g., an optical disk or the like. Further, the print data conversion program 35 and the language monitor program 36 may be provided in an integrated fashion or separately. Moreover, there may be a case where the print data generated by the print data generation program 33b are supplied directly to the language monitor program 36 without involvement of the spooler 32.

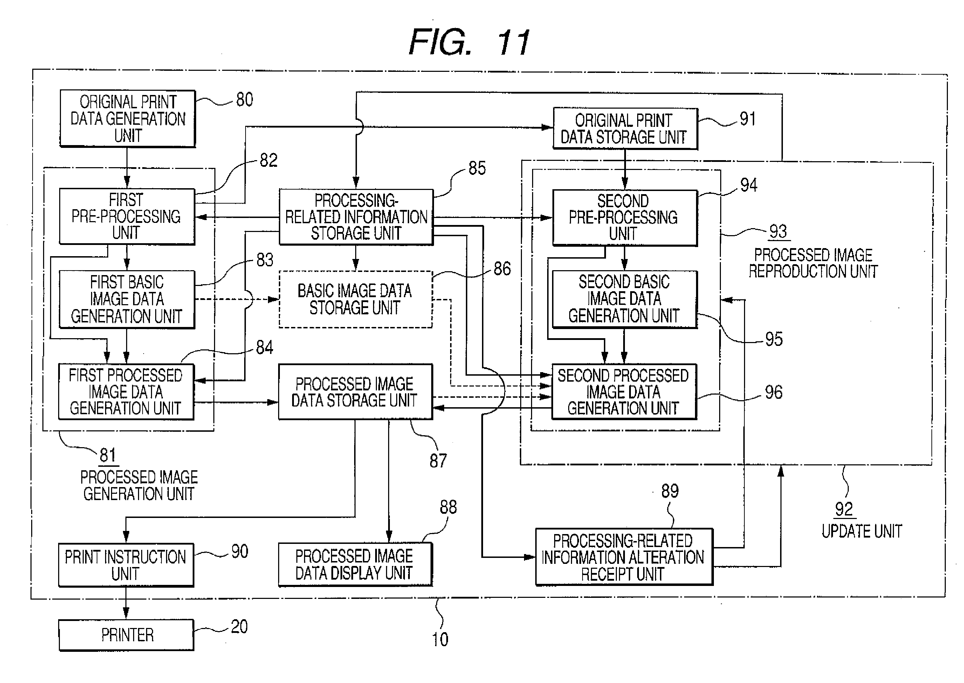

The function to be embodied by the print data conversion program 35 will now be described in detail. Fig. 11 is a functional block diagram showing, among functional blocks embodied by the host computer 10, the functional blocks pertaining to embodiments of the present invention. As illustrated, the host computer 10 includes an original print data generation unit 80, a processed image generation unit 81, a processing-related information storage unit 85, a processed image data storage unit 87, a processed image data display unit 88, a processing-related information alteration receipt unit 89, a print instruction unit 90, an original print data storage unit 91, and an update unit 92. The original print data generation unit 80 is realized by means of the control unit 11 executing the print data generation programs 33a, 33b. Another functional block is realized by means of the control unit 11 executing the print data conversion program 35 and the language monitor program 36.

### [1. Original Print Data Generation Unit]

The original print data generation unit 80 generates print data (original print data) pertaining to the original receipt image 40 (the original image), and supplies the print data to the processed image generation unit 81. As mentioned previously, the original print data generation unit 80 sequentially generates, e.g., command data representing a type font, command data showing print specifics of each line, and command data showing the end of a page, as original print data; and sequentially supplies the original print data to the processed image generation unit 81.

### [2. Processing-Related Information Storage Unit]

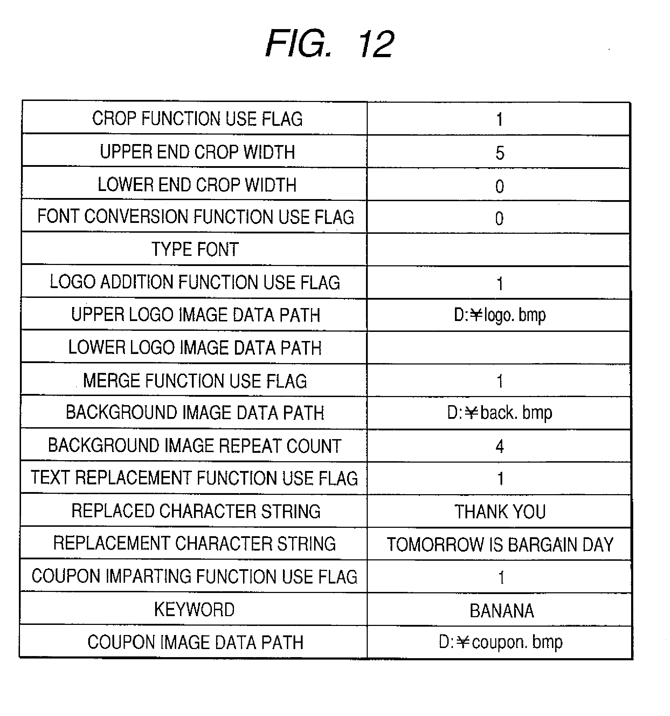

The processing-related information storage unit 85 stores processing-related information pertaining to processing of the original receipt image 40. The processing-related information storage unit 85 stores a processing-related information table such as that shown in, e.g., Fig. 12. As illustrated, the processing-related information table includes a "crop function use flag" field; an "upper end crop width" field; a "lower end crop width" field; a "font conversion function use flag" field; a "type font" field; a "logo addition function use flag" field; an "upper logo image data path" field; a "lower logo image data path" field; a "merge function use flag" field; a "background image data path" field; a "background image repeat count" field; a "text replacement function use flag" field; a "replaced character string" field; a "replacement character string" field; a "coupon imparting function use flag" field; a "keyword" field; and a "coupon image data path" field.

The "crop function use flag" field stores information showing whether or not the crop function is used. When the crop function is used, for example, "1" is stored. In contrast, when the crop function is not used, for example, "0" is stored. A numeral --showing a width to be cropped from the upper end of the original receipt image 40, for example, in millimeters-- is stored in the "upper end crop width" field. Similarly, a numeral --showing a width to be cropped from the lower end of the original receipt image 40, for example, in millimeters-- is stored in the "lower end crop width" field. Information about whether or not the font conversion function is used is stored in the "font conversion function use flag" field, and, for example, similar to the case of the "crop function use flag" field, "0" or "1" is stored. Information used for specifying a type font is stored in the "type font" field. Information about whether or not the logo addition function is used is stored in the "logo addition function use flag" field. For example, similar to the case of the "crop function use flag" field, "0" or "1" is stored. Information used for specifying the logo image data pasted to the upper side of the receipt image is stored in the "upper logo image data path" field. Information used for specifying the logo image data pasted to the lower side of the receipt image is stored in the "lower logo image data path" field. Information about whether or not the merge function is used is stored in the "merge function use flag" field, and, for example, similar to the case of the "crop function use flag" field, "0" or "1" is stored. Information used for specifying the background image data added to the receipt image is stored in the "background image data path" field. Information showing the number of times an output of background image data is repeated is stored in the "background image repeat count" field. Information about whether or not the text replacement function is used is stored in the "text replacement function use flag" field, and, for example, as in the case of the "crop function use flag" field, "0" or "1" is stored. Further, a replaced character string is stored in the "replaced character string" field, and a replacement character string is stored in the "replacement character string" field. Information about whether or not the coupon imparting function is used is stored in the "coupon imparting function use flag" field, and, for example, as in the case of the "crop function use flag" field, "0" or "1" is stored. A character string, which is to become a keyword, is stored in the "keyword" field. Information used for specifying coupon image data added to the receipt image is stored in the "coupon image data path" field.

### [3. Processed Image Generation Unit]

The processed image generation unit 81 generates the processed receipt image 40a (a processed image) based on the print data (command data) sequentially supplied from the original print data generation unit 80 and a processing-related information table to be stored in the processing-related information storage unit 85. The processed image generation unit 81 includes a first pre-processing unit 82, a first basic image data generation unit 83, and a first processed image data generation unit 84.

### [3-1, First Pre-processing Unit]

The first pre-processing unit 82 receives the command data sequentially supplied from the original print data generation unit 80. The first pre-processing unit 82 stores the received command data into the original print data storage unit 91. The command data that have been sequentially supplied from the original print data generation unit 80 to the first pre-processing unit 82 are stored in the original print data storage unit 91 so that the command data can be sequentially read in that sequence. For example, information showing the sequence of supply of command data from the original print data generation unit 80 to the first pre-processing unit 82 is stored in the original print data storage unit 91 in association with the respective sets of command data. The first pre-processing unit 82 sequentially supplies the sequentially-received command data to the first basic image data generation unit 83. There may arise a case where, based on the processing-related information table stored in the processing-related information storage unit 85, the first pre-processing unit 82 processes the command data supplied from the original print data generation unit 80 and supplies the processed command data to the first basic image data generation unit 83.

For example, in a case where the "font conversion function use flag" field assumes a value of "1," every time the first pre-processing unit 82 receives the command data showing a type font, the first pre-processing unit 82 converts the thus-received command data into command data showing a type font specified by specifics of the "type font" field, and supplies the thus-converted command data to the first basic image data generation unit 83.

For example, in a case where the "text replacement function use flag" field assumes a value of "1," every time the first pre-processing unit 82 receives the command data showing print details of each line, the first pre-processing unit 82 determines whether or not the print details of that line include the character string (a replaced character string) stored in the "replaced character string" field. When the replaced character string is determined to be included, the first pre-processing unit 82 converts the replaced character string portion of the command data into a character string to be stored in the "replacement character string" field, and the replaced command data are supplied to the first basic image data generation unit 83.

In a case where the "coupon imparting function use flag" field assumes a value of "1," every time the first pre-processing unit 82 receives the command data showing print details of each line, the first pre-processing unit 82 determines whether or not the print details of that line include the character string (keyword) to be stored in the "keyword" field. Upon determining that the keyword is included, the first pre-processing unit 82 reads a path for coupon image data from the "coupon image data path" field; generates processing instruction data having a format of, e.g., "print logo="D:¥coupon.bmp"; and supplies the processing command data to the first processed image data generation unit 84.

The first pre-processing unit 82 determines whether or not the received command data are "command data showing the end of a page." When the received command data are "command data showing the end of a page," a message to this effect is reported to the first basic image data generation unit 83.

### [3-2. first Basic Image Data Generation Unit]

The first basic image data generation unit 83 generates image data which serve as a basis upon which the first processed image data generation unit 84 generates the processed receipt image 40a. Specifically, based on the command data sequentially supplied from the first pre-processing unit 82, the first basic image data generation unit 83 generates raster image data pertaining to the overall receipt image; namely, image data which are formed by assigning coloring information to respective pixels forming the receipt image. Based on the command data supplied from the first pre-processing unit 82, the first basic image data generation unit 83 retains various data used for generating raster image data pertaining to the receipt image. For example, the first basic image data generation unit 83 stores font image data pertaining to the type font which can be specified by the command data supplied from the first pre-processing unit 82.

The raster image data generated by the first basic image data generation unit 83 serve as raster image data pertaining to the original receipt image 40. When the "font conversion function use flag" field is selected, e.g., has a value of 1, the raster image data generated by the first basic image data generation unit 83 become raster image data pertaining to the receipt image for which the type font of the original receipt image 40 is converted into the type font specified by the specifics of the "type font" field. When the "text replacement function use flag" field is selected, e.g., has a value of 1, the raster image data generated by the first basic image data generation unit 83 serve as raster image data pertaining to a receipt image in which the replaced character string included in the original receipt image 40 is replaced with the replacement character string.

The first basic image data generation unit 83 generates intermediate control data pertaining to the command data used for controlling the mechanism of a printer. For example, when having received command data showing a command to crop an image recording medium, the first basic image data generation unit 83 generates intermediate control data; e.g., "Feed to cutter=True; Cut percentage=50%; ...." The intermediate control data are stored in the processed image data storage unit 87 by way of the first processed image data generation unit 84, and are finally supplied to the print instruction unit 90.

### [3-3. First Processed Image Data Generation Unit]

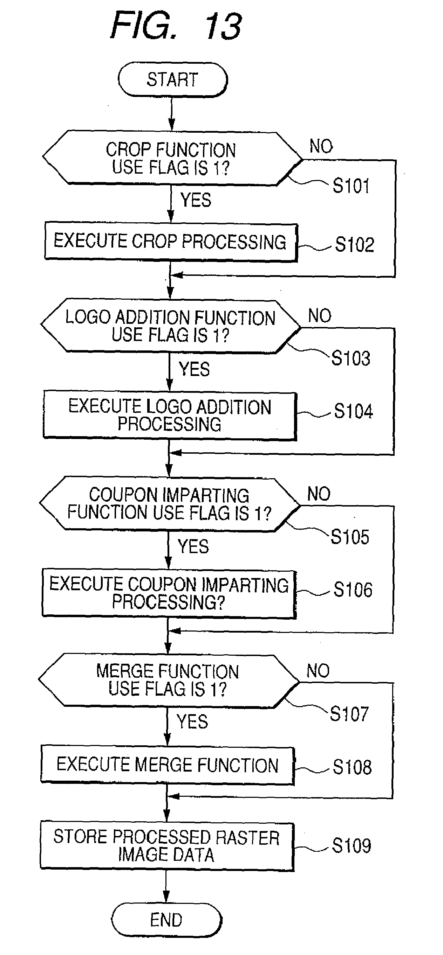

Based on the processing-related information table stored in the processing-related information storage unit 85, the first processed image data generation unit 84 subjects the raster image data generated by the first basic image data generation unit 83 to various image processing operations. Fig. 13 is a flowchart showing processing executed by the first processed image data generation unit 84.

As shown in Fig. 13, the first processed image data generation unit 84 determines whether or not the "crop function use flag" field assumes a value of "1" (S101). When the "crop function use flag" field assumes a value of "1," the first processed image data generation unit 84 executes crop processing (S102). Specifically, the first processed image data generation unit 84 crops a width, which is specified by specifics of the "upper end crop width" field, from the upper end of the raster image data generated by the first basic image data generation unit 83, and crops a width, which is specified by specifics of the "lower end crop width" field, from the lower end of the same.

Next, the first processed image data generation unit 84 determines whether or not the "logo addition function use flag" field is selected, e.g., has a value of "1" (S103). When the "logo addition function use flag" field has a value of "1," the first processed image data generation unit 84 executes logo addition processing (S104). For example, the first processed image data generation unit 84 pastes the lower end of the image data specified by specifics of the "upper logo image data path" field to the upper end of the raster image data which has been generated by the first basic image data generation unit 83 and has undergone processing pertaining to S101 and S102; and pastes the upper end of the image data specified by specifics of the "lower logo image data path" field to the lower end of the raster image data.

The first processed image data generation unit 84 determines whether or not the "coupon imparting function use flag" field is selected, e.g., has a value of "1" (S105). When the "coupon imparting function use flag" field has a value of "1," the first processed image data generation unit 84 executes coupon imparting processing (S106). Specifically, the first processed image data generation unit 84 acquires a path for coupon image data from the processing instruction data supplied from the first pre-processing unit 82. The first processed image data generation unit 84 pastes coupon image data specified by the acquired path for coupon image data to the lower end of the raster image data which has been generated by the first basic image data generation unit 83 and has undergone processing pertaining to S101 to S104, in conjunction with a predetermined separation image (a broken line or the like).

The first processed image data generation unit 84 determines whether or not the "merge function use flag" field is selected, e.g, has a value of "1" (S107). When the "merge function use flag" field has a value of "1," the first processed image data generation unit 84 performs merge processing (S108). For example, the first processed image data generation unit 84 is identical with raster image data in terms of the number of pixels arranged in rows and columns. An image specified by specifics of the "background image data path" field is repeatedly represented from a given position the number of times indicated by the "background image repeat count" field. Background image data, where a transparent attribute is set in areas other than the background image, are generated. The first processed image data generation unit 84 merges, in a translucent manner, the background image data with the raster image data that have been generated by the first basic image data generation unit 83 and have undergone processing pertaining to S101 through S106.

The first processed image data generation unit 84 stores, in the processed image data storage unit 87, the raster image data that have been generated by the first basic image data generation unit 83 and have undergone processing pertaining to S101 through S108 (S109).

As mentioned above, the first processed image data generation unit 84 subjects the raster image data generated by the first basic image data generation unit 83 to various image processing operations based on the processing-related information table stored in the processing-related information storage unit 85. The obtained raster image data obtained as above are stored in the processed image data storage unit 87.

### [4. Processed Image Data Display Unit and Processing-Related Information Alteration Receipt unit]

Based on the raster image data stored in the processed image data storage unit 87, the processed image data display unit 88 displays the processed receipt image 40a. The processing-related information alteration receipt unit 89 guides the user in changing specifics of the processing-related information table stored in the processing-related information storage unit 85 while the processed receipt image 40a is being displayed, thereby receiving the alterations in the processing-related information table.

The preview image 50 (Fig. 10) is displayed by means of the processed image data display unit 88 and the processing-related information alteration receipt unit 89. Based on the raster image data stored in the processed image data storage unit 87, the processed receipt image 40a is displayed in the preview area 51 of the preview screen 50. Further, specifics of the processing-related information table stored in the processing-related information storage unit 85 are reflected in the check boxes, the combo boxes, and the input forms, all of which are included in the preview screen 50. For example, specifics of the "crop function use flag" field are reflected in the check box 52 of the preview screen 50.

### [5. Update Unit]

When the processing-related information alteration receiving unit 89 has received the alterations in the processing-related information table, the update unit 92 updates the processing-related information table stored in the processing-related information storage unit 85 based on the alterations, and the processed receipt image 40a displayed on the preview screen 50 is updated.

In one or more embodiments, when operation for instructing the application button 74 has been performed on the preview screen 50, the update unit 92 updates the processing-related information table to be stored in the processing-related information storage unit 85, based on items input to the respective check boxes, the combo boxes, and the input forms of the preview screen 50. Subsequently, the processed receipt image 40a is again generated on the basis of the updated processing-related information table, and is displayed on the preview screen 50. The update unit 92 includes a processed image reproduction unit 93, and the processed image reproduction unit 93 reproduces the processed receipt image 40a.

### [5-1. Processed Image Reproduction Unit]

The processed image reproduction unit 93 reproduces the processed receipt image 40a. The processed image reproduction unit 93 includes a second pre-processing unit 94, a second basic image data generation unit 95, and a second processed image data generation unit 96.

### [5-2. Second Pre-processing Unit]

The second pre-processing unit 94 sequentially reads the command data (processed image reproduction basic data) stored in the original print data storage unit 91 (processed image reproduction basic data storage unit). Likewise the first pre-processing unit 82, the second pre-processing unit 94 sequentially supplies the sequentially-read command data to the second basic image data generation unit 95. There may be a case where, like the first pre-processing unit 82, the second pre-processing unit 94 also processes the command data read from the original print data storage unit 91, based on the processing-related information table stored in the processing-related information storage unit 85, and processed command data are supplied to the second basic image data generation unit 95.

### [5-3. Second Basic Image Data Generation Unit]

The second basic image data generation unit 95 generates image data which serve as a basis upon which the second processed image data generation unit 96 reproduces the processed receipt image 40a. Based on the command data sequentially supplied from the second pre-processing unit 94, the second basic image data generation unit 95 generates overall raster image data pertaining to the receipt image. The second basic image data generation unit 95 performs processing analogous to that executed by the first basic image data generation unit 83.

### [5-4. Second Processed Image Data Generation Unit]

The second processed image data generation unit 96 performs processing analogous to that (Fig. 13) executed by the first processed image data generation unit 84. The second processed image data generation unit 96 subjects the raster image data generated by the second basic image data generation unit 95 to various image processing operations based on the processing-related information table stored in the processing-related information storage unit 85. The raster image data obtained as above are stored in the processed image data storage unit 87. Based on the raster image data stored in the processed image data storage unit 87, the preview screen 50 displays the processed receipt image 40a.

As mentioned above, the processed receipt image 40a is reproduced, and the processed receipt image 40a to be displayed on the preview screen 50 is updated.

The processed image reproduction unit 93 may reproduce the processed receipt image 40a, based on the raster image data (processed image reproduction basic data) stored in the processed image data storage unit 87 (processed image reproduction basic data storage unit). For example, alterations are made solely to the upper end crop width (the value of the input form 53) or the lower end crop width (the value of the input form 54) on the preview screen 50. When the application button 74 is pointed with the value being increased, the second processed image data generation unit 96 may further crop the upper end or lower end of the raster image data (the raster image data pertaining to the processed receipt image 40a) to be stored in the processed image data storage unit 87, by an amount corresponding to an increase in the upper end crop width or the lower end crop width, to thus reproduce the processed receipt image 40a.

In the basic image data storage unit 86 (processed image reproduction basic data storage unit), the raster image data (processed image reproduction basic data) generated by the first basic image data generation unit 83 are stored. Based on the raster image data stored in the first basic image data generation unit 83, the processed image reproduction unit 93 may reproduce the processed receipt image 40a. For example, when no alterations are made, on the preview screen 50, to settings pertaining to the font conversion function, the text replacement function, and the coupon imparting function and when the application button 74 is pointed with only the settings pertaining to other functions being altered, the second processed image data generation unit 96 may read the raster image data stored in the basic image data storage unit 86 and subject the thus-read raster image data to various processing operations based on the processing-related information table stored in the processing-related information storage unit 85. The raster image data obtained as above may be stored in the processed image data storage unit 87.

### [6. Print Instruction Unit]

When operation for pointing the print button 73 on the preview screen 50 (print instruction operation) has been performed, the print instruction unit 90 causes the printer 20 to produce a printout of the raster image data stored in the processed image data storage unit 87. Specifically, the print instruction unit 90 generates print data used for causing the printer 20 to form the raster image data, which are stored in the processed image data storage unit 87, on an image recording medium. In one or more embodiments, the print instruction unit 90 sequentially generates command data used for instructing the printer 20 coloring information about pixels in each row of dots, and sequentially outputs the thus-generated command data to the printer 20. The print instruction unit 90 generates, as appropriate, the command data used for causing the printer 20 to control specifics indicated by the intermediate control data generated by the first basic image data generation unit 83, and outputs the thus-generated command data to the printer 20.

The printer 20 receives and interprets the command data sequentially transmitted from the print instruction unit 90. In accordance with the command data, forming a receipt image on an image recording medium, cropping the image recording medium, or the like, is performed.

As has been described above, the print system 1 according to one or more embodiments of the present invention subjects the receipt image created by the POS application programs 30a, 30b to processing set by the user. For example, there can be performed cropping of the upper end portion or lower end portion of the original receipt image 40 created by the POS application programs 30a, 30b (the crop function); adding the logo image to the upper side or lower side of the receipt image (the logo addition function); adding the background image to the receipt image (the merge function); altering the type font or font style of the receipt image to another font type or another font style (the font conversion function); replacing a predetermined character string included in the receipt image with another predetermined character string (the text replacement function); and adding a coupon image or an advertisement image, which corresponds to a keyword, to the receipt image when the receipt image includes the keyword (the coupon imparting function) . For example, by means of the coupon imparting function, a coupon image or an advertisement image pertaining to a commodity or a related commodity is automatically added to a receipt image including the name of a specific commodity. Consequently, an advertisement, a coupon, or the like, pertaining to a specific commodity or a related commodity can be reliably delivered to the person who has purchased the commodity while an attempt is made to lessen efforts.

According to the print system 1, the language monitor program 36 and the print data conversion program 35 process the receipt image during the course of printing-out operation. When a receipt image is subjected to processing, alterations do not need to be made to the POS application programs 30a, 30b.

According to the print system 1, the user can confirm, on the screen, how the processed receipt image is actually printed out, as a result of the preview screen 50 being displayed.

According to the print system 1, the user can alter settings pertaining to processing of a receipt image on the preview screen 50. Since the alterations are reflected on the processed receipt image 40a displayed on the preview screen 50, the user can perform operation for making alterations to settings pertaining to processing of the receipt image while confirming the processed receipt image 40a displayed on the preview screen 50. Consequently, the user can preferably pursue operation for making alterations to settings pertaining to processing of the receipt image.

The present invention is not limited to the above-described embodiments.

For example, the operating system executed by the host computer 10 is not limited to Windows (Registered Trademark) manufactured by Microsoft Corporation. Moreover, the application program executed by the host computer 10 is not limited to the POS application programs 30a, 30b. Specifically, an object to be printed by the printer 20 is not limited to the receipt image created by the POS application programs 30a, 30b. A document or image created by another application program may also be the object.

For example, the above descriptions have mentioned that the host computer 10 and the printer 20 are connected together by way of a USB cable. However, the host computer 10 and the printer 20 may be connected by way of a communications network such as a LAN (Local Area Network) or the like. In this case, the interfaces 15 and 24 may be configured as communications interfaces used for establishing a connection with the communications network.

A program called by a designation other than the "language monitor program" (e.g., a "port emulator" or the like) may be used in place of the language monitor program 36.

For example, the printer 20 may be embodied by a functional block other than the original print data generation unit 80 among the functional blocks shown in Fig. 11.

For example, in relation to the coupon imparting function, the image recording medium may be cropped (e.g., partially or fully cropped) rather than a broken line being printed between the main body of the receipt image and the coupon image.

For example, according to the merge function, the user may be hindered from specifying the number of times a background image is repeated. Specifically, the input form 65 and a label thereof (a repeat count) do not need to be provided on the preview screen 50. The processing-related information table may not be provided with the "background image repeat count" field. In this case, the essential requirement for the merge function is to repeatedly display on the back of the receipt image the background image, which is specified by details of the "background image data path" field, the number of repetitions corresponding to the vertical size of the receipt image and the longitudinal size of the background image.

For example, the original print data storage unit 91 may store a portion of the original print data supplied from the original print data generation unit 80 to the first pre-processing unit 82. For example, it may be the case that, among the original print data supplied from the original print data generation unit 80 to the first pre-processing unit 82, only the original print data which are required to reproduce the processed receipt image 40a are stored in the original print data storage unit 91. Specifically, it may be the case that the command data used for controlling the mechanism of the printer (e.g., command data used for instructing a position where the image recording medium is to be cut or a mode in which the image recording medium is to be cut) are not stored in the original print data storage unit 91. Data (processed image reproduction basic data) generated based on the original print data supplied from the original print data generation unit 80 to the first pre-processing unit 82 may be stored in the original print data storage unit 91. Alternatively, data showing print details, a type font, or the like, may be generated by the first pre-processing unit 82 in a format that differs from that of the original print data supplied from the original print data generation unit 80 to the first pre-processing unit 82, and the thus-generated data may be stored in the original print data storage unit 91. In this case, the processed image reproduction unit 93 interprets data of that format and reproduces the processed receipt image 40a.

For example, on the preview screen 50, the user may be able to alter the settings pertaining to processing of the original receipt image 40, by means of specifying an arbitrary position or area in the preview area 51 through use of a mouse or the like, or dragging and dropping image data (an image data file) to the desired position or area in the preview area 51.

Specifically, the user may specify a range in the preview area 51 by means of dragging the mouse, to thus be able to specify a crop range in the upper end or lower end of the receipt image. In this case, based on the range specified by the user, a width to which the upper end or lower end of the receipt image is cropped is calculated, and the essential requirement is to input the value to the input form 53 or 54.

The user may drag and drop image data (an image data file) to the area which corresponds to the upper end or lower end of the receipt image in the preview area 51, to thus be able to specify logo image data. In this case, the only requirement is to input a path for the dragged and dropped image data into the input form 58 or 59.

The user may drag and drop image data (an image data file) to a region corresponding to the lower end of the receipt image within the preview area 51, to thus be able to specify coupon image data. In this case, the only requirement is to input a path for the dragged and dropped image data into the input form 71.

The user may specify an arbitrary region in the preview area 51, to thus enable specification of a replaced character string. Specifically, the essential requirement is to specify, as a replaced character string, the character string (a character string appearing in the region specified by the user) corresponding to the inside of the area specified by the user, and to input the specified replaced character string into the input form 67.

In this case, the processing-related information alteration receipt unit 89 determines, e.g., the character string assigned to the area specified by the user, as follows. First, the processing-related information alteration receipt unit 89 should read the command data assigned to the area specified by the user from the original print data storage unit 91. Here, the processing-related information alteration receipt unit 89 retains information showing correspondence between a position or area in the preview area 51 and command data. More specifically, information about correspondence between a position or area in the preview area 51 and the ordinal number of a letter in a line and the ordinal number of a line to which the letter belongs in the receipt image is retained. Based on the information, the only requirement for the processing-related information alteration receipt unit 89 is to read the command data showing print details of a line assigned to the area specified by the user. The processing-related information alteration receipt unit 89 should acquire a character string assigned to the area specified by the user from the read command data. In this case, as a consequence, specifics of the processing-related information table of the processing-related information storage unit 85 are updated on the basis of the original print data stored in the original print data storage unit 91.

As described above with reference to exemplary embodiments, there is provided a print system which subjects the image data created by an application program to processing set by the user, to thus produce a printout, wherein the user can attempt to effect appropriate settings pertaining to processing of the image data created by the application program, as well as providing a method and program for controlling the print system.
According to one or more embodiments of the present invention, the following exemplary configurations are provided.

(1) A print system for causing a printer to produce a printout of a processed image based on print data pertaining to an original image generated by any one of a plurality of print data generation programs. The print system includes: a processing-related information storage unit that stores processing-related information pertaining to processing of the original image; a processed image generation unit that generates the processed image based on the print data pertaining to the original image and the processing-related information stored in the processing-related information storage unit; a display unit that displays the processed image generated by the processed image generation unit; a processing-related information alteration receipt unit that guides a user to alter the processing-related information stored in the processing-related information storage unit with the processed image being displayed, and receives alterations to the processing-related information; and an update unit that updates the processing-related information stored in the processing-related information storage unit in accordance with the alterations received by the processing-related information alteration receipt unit, and updates the processed image to be displayed by the display unit.

(2) A method for controlling the print system according to (1). The method includes: generating the processed image based on the print data pertaining to the original image and the processing-related information stored in the processing-related information storage unit; displaying the processed image by the display unit; guiding a user to alter the processing-related information stored in the processing-related information storage unit with the processed image being displayed; receiving alterations to the processing-related information; updating the processing-related information stored in the processing-related information storage unit in accordance with the alterations; and updating the processed image to be displayed by the display unit.

(3) A computer-readable program product for causing a computer to function as a print system for causing a printer to produce a printout of a processed image based on print data pertaining to an original image generated by any one of a plurality of print data generation programs. The program product causes the computer to perform procedures including: generating the processed image based on the print data pertaining to the original image and the processing-related information stored in the processing-related information storage unit; displaying the processed image by the display unit; guiding a user to alter the processing-related information stored in the processing-related information storage unit with the processed image being displayed; receiving alterations to the processing-related information; updating the processing-related information stored in the processing-related information storage unit in accordance with the alterations; and updating the processed image to be displayed by the display unit.

The information storage medium of the present invention is a computer-readable information storage medium where the programs are stored.

The present invention relates to a print system for causing a printer to produce a printout of a processed image based on print data pertaining to an original image generated by any of a plurality of print data generation programs. According to embodiments of the present invention, processing-related information pertaining to processing of the original image is stored. Moreover, the processed image is generated on the basis of print data pertaining to the original image and processing-related information, and the thus-generated processed image is displayed. A user is guided in altering processing-related information with the processed image being displayed, and alterations to the processing-related information are accepted. When alterations to processing-related information have been accepted, processing-related information is updated on the basis of the alterations, and a processed image to be displayed is updated. According to the present invention, a print system --which produces a printout by means of subjecting the image data created by an application program to processing set by the user-- enables the user to effect appropriate settings pertaining to processing of the image data created by the application program.

According to one aspect, the print system may further include processed image reproduction basic data storage unit for storing, as processed image reproduction basic data, data based on print data pertaining to the original image and/or print data pertaining to the original image. The update unit may include processed image reproduction unit. When the processing-related information alteration receipt unit has received alterations to processing-related information, the processed image reproduction unit reproduces the processed image on the basis of the alterations and processed image reproduction basic data stored in the processed image reproduction basic data storage unit. A processed image reproduced by the processed image reproduction unit may be displayed on the display unit.

In this aspect, the processing-related information alteration receipt unit may determine alterations to the processing-related information based on processed-image reproduction basic data stored in the processed image reproduction basic data storage unit.
The foregoing description of specific embodiments has been presented for purposes of illustration and description. It is not intended to be exhaustive or to limit the invention to the precise form disclosed. Modifications and variations are possible in light of the above teachings or may be obtained from practice of the invention. The disclosed embodiments were chosen and described in order to explain the principles of the invention and its practical application program to enable one skilled in the art to utilize the invention in various embodiments and with various modifications as are suited to the particular use contemplated. It is intended that the scope of the invention be defined by the claims appended hereto, and their equivalents.

## Claims

1. A print system (1) for causing a printer (20) to produce a printout of a processed image based on print data pertaining to an original image generated by any one of a plurality of print data generation programs (33a, 33b), the print system (1) comprising:
a processing-related information storage unit (85) that stores processing-related information pertaining to processing of the original image;
a processed image generation unit (81) that generates the processed image based on
the print data pertaining to the original image and
the processing-related information stored in the processing-related information storage unit (85);
a display unit (88) that displays the processed image generated by the processed image generation unit (81);
a processing-related information alteration receipt unit (89) that
allows a user to alter the processing-related information stored in the processing-related information storage unit (85) with the processed image being displayed, and
receives alterations to the processing-related information; and
an update unit (92) that updates the processing-related information stored in the processing-related information storage unit (85) in accordance with the alterations received by the processing-related information alteration receipt unit (89), and
updates the processed image to be displayed on the display unit (88).

2. The print system (1) according to claim 1, further comprising a processed image reproduction basic data storage unit (86) that stores, as processed image reproduction basic data, at least one of
the print data pertaining to the original image and
data based on the print data pertaining to the original image,
**characterized in that** the update unit comprises a processed image reproduction unit (93) that
reproduces the processed image in accordance with
the alterations received by the processing-related information alteration receipt unit (89) and
the processed image reproduction basic data stored in the processed image reproduction basic data storage unit (86), and
controls the display unit (88) to display the processed image reproduced by the processed image reproduction unit (93).

3. The print system according to claim 2, **characterized in that** the processing-related information alteration receipt unit (89) determines the alterations to the processing-related information based on the processed-image reproduction basic data stored in the processed image reproduction basic data storage unit (86).

4. A method for controlling a print system (1) for causing a printer (20) to produce a printout of a processed image based on print data pertaining to an original image generated by any one of a plurality of print data generation programs (33a, 33b), the method comprising:
generating the processed image based on
the print data pertaining to the original image and
processing-related information stored in a processing-related information storage unit (85);
displaying the processed image on a display unit (14);
allowing a user to alter the processing-related information stored in the processing-related information storage unit (85) with the processed image being displayed;
receiving alterations to the processing-related information;
updating the processing-related information stored in the processing-related information storage unit (85) in accordance with the alterations; and
updating the processed image to be displayed on the display unit (88).

5. A computer-readable program product for causing a computer (10) to function as a print system (1) for causing a printer (20) to produce a printout of a processed image based on print data pertaining to an original image generated by any one of a plurality of print data generation programs (33a, 33b), the program product causing the computer to perform procedures comprising:
generating the processed image based on
the print data pertaining to the original image and
processing-related information stored in a processing-related information storage unit (85);
displaying the processed image on a display unit (88);
allowing a user to alter the processing-related information stored in the processing-related information storage unit (85) with the processed image being displayed;
receiving alterations to the processing-related information;
updating the processing-related information stored in the processing-related information storage unit (85) in accordance with the alterations; and
updating the processed image to be displayed on the display unit (88).

6. The print system (1) according to claim 1, **characterized in that** the processed image generation unit (81) acquires the print data pertaining to the original image through a specific program (31) that receives an output from the plurality of programs (33a, 33b) and outputs to the printer (20), and
wherein the print system (1) further comprises a print instruction unit (90) that causes the printer (20) to produce the output of the processed image through the specific program (31) that receives an output from the plurality of programs (33a, 33b) and outputs to the printer (20).
